# FASCICULE DE BREVET EUROPEEN

(11) **EP 0 723 087 B1**
(45) Date de publication et mention de la délivrance du brevet: **27.03.2002**
(21) Numéro de dépôt: 96400091.3
(22) Date de dépôt: 15.01.1996
(51) Int. Cl.: F16C 25/08, H02K 5/173

(54) **Palier à roulement, notamment palier arrière d'alternateur de véhicule automobile**
Wälzlager, insbesondere Hinterlager für einen Kraftfahrzeugalternator
Rolling bearing, especially rear bearing of an alternator in an automotive vehicle

(30) Priorité: 17.01.1995 FR 9500445
(43) Date de publication de la demande: 24.07.1996
(73) Titulaire: VALEO EQUIPEMENTS ELECTRIQUES MOTEUR, 94000 Creteil (FR)
(72) Inventeur: Vogelsberger, Marcel, F-91320 (FR); Davoigneau, Daniel, F-77290 Mitry-Mory (FR)
(74) Mandataire: Martin, Jean-Jacques

(56) Documents cités:
- CH-A- 336 653
- DE-C- 471 572
- DE-C- 501 140
- FR-A- 1 135 722
- FR-A- 2 608 708
- GB-A- 2 147 957
- US-A- 4 655 616
- US-A- 5 000 589

## Description

La présente invention est relative à un assemblage comportant un palier à roulement selon le préambule de la revendication 1.

Elle trouve en particulier avantageusement application pour des paliers arrière d'alternateurs de véhicules automobiles.

Généralement, le roulement d'un palier est maintenu sur son support au moyen de capsules ou rondelles plastiques ou d'éléments rapportés en acier (bague d'arrêt par exemple). Dans tout le présent texte, on entend par palier arrière d'un alternateur le palier situé sur ledit alternateur du côté opposé à l'entraînement.

Ces différentes solutions tentent de concilier rigidité de fonctionnement (maintien axial de l'arbre) et liberté de mise en place.

Toutefois, le jeu nécessaire à la mise en place et à un fonctionnement sans contrainte sur le roulement est néfaste et peut conduire, sous l'effet des vibrations à haute vitesse, à plusieurs types de défauts.

En particulier, la bague externe du roulement peut subir une rotation qui entraîne la destruction du palier.

Egalement, le jeu axial des roulements et les vibrations à haute vitesse peuvent entraîner la destruction des chemins de roulement sur les bagues.

Les vibrations et percussions dues à ce jeu peuvent également entraîner des usures prématurées du roulement ou de son logement sur le support du palier.

Le document FR-A-1 135 722 décrit un palier de machine à arbre tournant comportant un roulement monté entre un support et l'arbre. La bague externe du roulement est fixée rigidement au support tandis que la bague interne peut coulisser par rapport à l'arbre. Une colonne constituée de deux ressorts-assiettes est interposée entre la bague interne et un épaulement de l'arbre pour exercer un effort tendant à les écarter pour annuler le jeu axial de fonctionnement. Toutefois, les ressorts-assiettes présentent une raideur très importante de sorte qu'ils ne manifestent une élasticité significative que sous l'effet de fortes contraintes. Il s'ensuit que le jeu axial n'est rattrapé qu'en contrepartie de contraintes axiales importantes sur les pièces, ce qui nuit au bon fonctionnement du palier.

Un but de l'invention est donc de proposer un palier à roulement pour machine tournante qui permet :
- un centrage de qualité,
- une rigidité, c'est à dire une absence de jeu en fonctionnement, sans contraintes axiales excessives entre les pièces,
- une immobilisation en rotation de la bague extérieure,
- l'annulation des contraintes de montage ou de dilatation thermique, et
- un refroidissement satisfaisant du roulement.

On connaît déjà par FR 2 608 708 un assemblage du type mentionné ci-dessus.

Selon la solution proposée par l'invention, l'anneau plat est un anneau intérieur, lesdites pattes s'étendant à partir dudit anneau à l'extérieur de celui-ci avec une forme générale trapézoïdale dont la grande base est située au niveau dudit anneau plat et dont la petite base est située à l'extrémité desdites pattes où celles-ci se terminent par un méplat.

Sous l'effet des contraintes axiales, les pattes radiales se déforment élastiquement indépendamment les unes des autres. La rondelle à pattes radiales présente donc une raideur moins élevée que les ressorts-assiettes de dimensions comparables. La rondelle permet ainsi d'exercer élastiquement un effort pour rattraper le jeu axial entre les pièces sans contrainte axiale excessive sur celles-ci.

Selon d'autres caractéristiques avantageuses de l'invention, qui peuvent être prises seules ou selon toutes leurs combinaisons techniquement possibles :
- le palier comporte deux rondelles superposées qui présentent chacune un anneau intérieur et une pluralité de pattes élastiques qui s'étendent dudit anneau vers l'extérieur, les pattes élastiques des deux rondelles se rejoignant à leurs extrémités et maintenant les deux anneaux intérieurs écartés l'un de l'autre, l'un de ces anneaux étant en appui sur l'épaulement, l'autre étant en appui sur la bague interne du roulement ;
- une rondelle annulaire rigide en butée sur l'épaulement de l'arbre et une rondelle élastique qui présente un anneau interne par lequel elle est en appui sur la bague interne du roulement et une pluralité de pattes élastiques qui s'étendent à partir dudit anneau interne et qui sont en appui sur la rondelle rigide ;
- la bague externe est fixée dans le logement du support qui reçoit le roulement, par serrage contre une paroi de fond de ce logement ;
- une plaquette est rapportée par vissage sur la face du support opposée audit fond ;
- la bague externe est sertie dans le logement du support qui reçoit le roulement ;
- la paroi de fond du logement présente une portée annulaire en saillie à l'intérieur du logement contre laquelle la bague externe est en appui.

L'invention concerne également un tel palier arrière d'alternateur, notamment de véhicule automobile, ainsi qu'un alternateur comportant un tel palier.

D'autres caractéristiques et avantages de l'invention ressortiront encore de la description qui suit.

Cette description est purement illustrative et non limitative. Elle doit être lue en regard des dessins annexés sur lesquels :
- la figure 1 est une vue en coupe axiale avec arraché d'un palier arrière d'alternateur ;
- la figure 2 est une vue de face de la rondelle élastique du palier représenté sur la figure 1 ;
- la figure 3 est une vue en coupe selon la ligne III-III de la figure 2 ;
- les figures 4 à 6 sont des représentations semblables à celles des figures 1 à 3, d'un palier conforme à un mode de réalisation possible pour l'invention ;
- les figures 7 à 9 sont des représentations semblables à celles des figures 1 à 3, d'un palier conforme à un autre mode de réalisation encore possible pour l'invention.

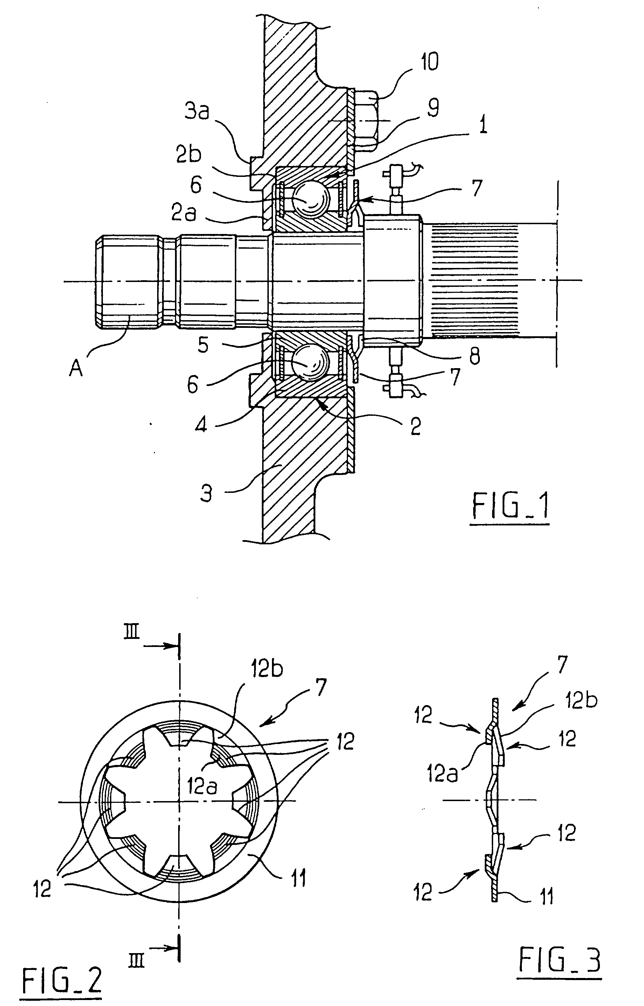

Le palier arrière d'alternateur qui a été représenté sur la figure 1 comporte un roulement 1 monté dans un logement 2 ménagé sur un flasque 3 d'extrémité de l'alternateur. Ce palier assure la rotation de l'arbre, référencé par A, de l'alternateur.

Le roulement 1 comporte une bague externe 4 montée rigidement dans le logement 2 et une bague interne 5 montée coulissante sur l'arbre A. Les éléments de roulement sont des billes 6 montées entre les chemins de roulement que les deux bagues 4 et 5 présentent.

Le logement 2 qui reçoit le roulement 1 présente un contour intérieur cylindrique, dont le diamètre correspond au diamètre externe de la bague 4.

Ce logement 2 est fermé par un fond 2a à son extrémité du côté de la face extérieure du flasque 3.

Ce fond 2a présente une portée annulaire 2b qui est en saillie à l'intérieur du logement 2 et sur laquelle la bague externe 4 vient en appui. Le diamètre intérieur de cette portée annulaire 2b est légèrement supérieur au diamètre intérieur de la bague externe 4, de sorte qu'il existe un jeu entre la bague interne 5 et le fond 2a.

La bague externe 4 est maintenue par serrage dans le logement 2 par l'intermédiaire d'une plaquette annulaire 9 qui est rapportée sur la face interne du flasque 3 et qui est fixée sur ledit flasque 3 par plusieurs vis 10. Le diamètre intérieur de cette plaquette 9 est légèrement inférieur au diamètre extérieur de la bague externe 4 du roulement, de sorte que cette plaquette 9 s'étend partiellement au droit de la tranche de la bague externe 4. Le vissage est réalisé de façon à serrer la bague 4 contre la portée annulaire 2b.

La face externe du flasque 3 présente au droit de la portée 2b une nervure annulaire de rigidification 3a. Le diamètre externe de cette nervure 3a est supérieur au diamètre intérieur du logement 2.

Le palier comporte une rondelle élastique 7, passée sur l'arbre A, à l'intérieur de l'alternateur. Cette rondelle 7 est montée suivant la direction axiale entre, d'une part, un épaulement annulaire 8 que présente l'arbre A et, d'autre part, la bague interne 5 du roulement 1. La rondelle 7 est comprimée élastiquement entre cet épaulement 8 et la bague interne 5. Elle repousse ladite bague interne 5 axialement vers le fond 2a, de sorte que tous les jeux de fonctionnement sont annulés.

L'épaulement 8 s'étend à l'intérieur du carter de l'alternateur, au-delà de la face interne du flasque 3.

Avec la structure qui vient d'être décrite, la bague externe 4 du roulement 1 est fixée rigidement sur le support de palier que constitue le flasque 3. La bague interne 5 et l'arbre A sont coulissants l'un par rapport à l'autre dans les deux sens de la direction axiale. Les jeux de fonctionnement sont annulés par l'effort exercé par la rondelle 7 entre ladite bague 5 et l'épaulement 8.

La rondelle élastique 7 de la structure de palier conforme à l'invention peut bien entendu prendre différentes configurations.

La rondelle élastique 7 qui est représentée sur les figures 1 à 3 est une pièce métallique ou plastique qui présente un anneau externe plat 11 et une pluralité de pattes élastiques 12 trapézoïdales, qui s'étendent radialement à partir dudit anneau externe 11, vers l'intérieur de ladite rondelle 7.

Les grandes bases de ces pattes élastiques 12 sont situées au niveau de l'anneau externe plat 11. Ces pattes 12 se terminent chacune au niveau de leur petite base par un méplat 12a d'appui parallèle au plan de l'anneau plat. Ce méplat 12a est relié à l'anneau plat 11 par une portion élastique 12b alternativement inclinée d'un côté ou de l'autre du plan de l'anneau plat 11 sur le pourtour de la rondelle 7.

Les méplats 12a sont ainsi alternativement en appui les uns sur un chant plan de la bague interne 5, les autres sur l'épaulement 8. Ils assurent ainsi la mise sous précontrainte du roulement 1 et de l'arbre A en réalisant des contacts surface contre surface avec ceux-ci. Le diamètre interne que ces méplats 12a définissent pour la rondelle élastique 7 change en fonction de l'écrasement subi par celle-ci.

On notera que le nombre de pattes élastiques 12 est avantageusement choisi pair (8, 10 ou 12 par exemple).

Ce mode de réalisation comporte une unique rondelle. Il est particulièrement économique à fabriquer et à monter.

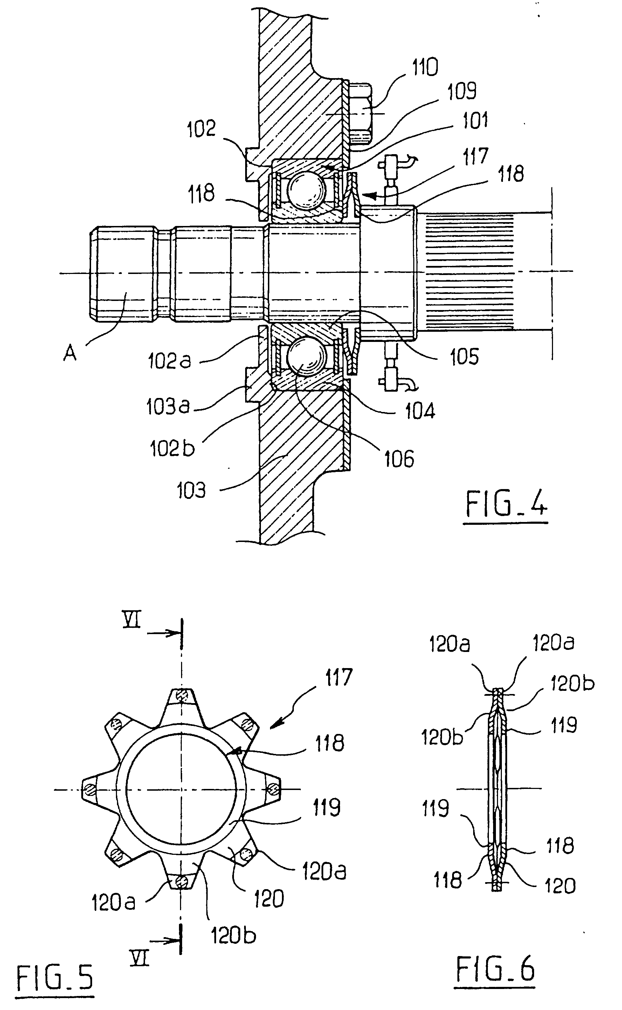

Sur la variante représentée sur les figures 4 à 6, on a repris pour les éléments de la variante des figures 1 à 3 qui se retrouvent sur cette variante les mêmes numérotations de référence augmentées de 100.

Le palier des figures 4 à 6 comporte en particulier un roulement 101 reçu dans un logement 102 d'un flasque 103. Ce roulement 101 est constitué d'une bague externe 104, d'une bague interne 105 et de billes 106.

Un élément élastique annulaire 117 est interposé élastiquement entre la bague interne 105 et un épaulement 108 que présente l'arbre A de l'alternateur.

L'élément élastique 117 est constitué de deux rondelles 118. Ces deux rondelles 118 présentent chacune un anneau interne plat 119 et une pluralité de pattes élastiques 120 trapézoïdales, qui s'étendent radialement à partir dudit anneau interne 119, vers l'extérieur.

Ces pattes 120 présentent chacune une portion élastique 120b inclinée par rapport au plan de l'anneau, qui relie un méplat d'extrémité 120a (parallèle au plan de l'anneau plat) qui les termine au niveau de leur petite base, à l'anneau plat 119. Les méplats 120a des deux rondelles 118 sont en appui mutuel et sont solidarisés les uns aux autres par exemple par soudure électrique. Les deux anneaux 119 sont écartés l'un de l'autre par les portions élastiques 120b.

Lorsque l'élément élastique 117 est en place sur le palier, les deux anneaux 119 sont écrasés élastiquement l'un vers l'autre en étant en contact l'un avec l'épaulement 108, l'autre avec la bague interne 105 du roulement 101. Le diamètre interne de ces anneaux est constant.

Le nombre et les dimensions des lames définies par les pattes 120 sont ajustés avec l'épaisseur des rondelles 118 en fonction de l'effort et de la course souhaités.

Cette pièce élastique d'un seul tenant rend le montage particulièrement simple à effectuer.

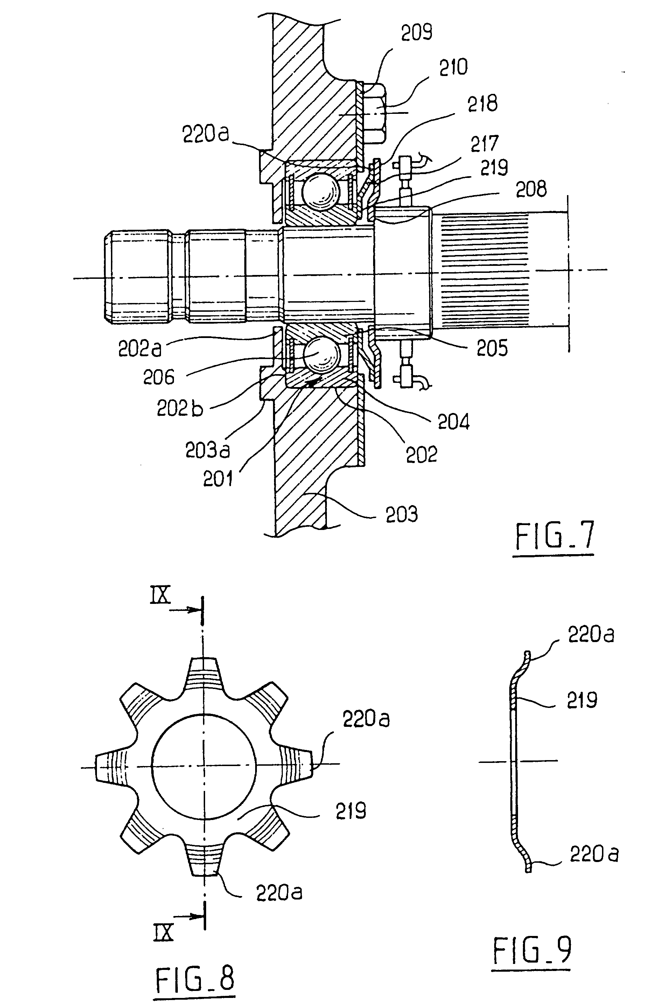

Sur la variante représentée sur les figures 7 à 9, on a repris pour les éléments de la variante des figures 1 à 3 qui se retrouvent sur cette variante les mêmes numérotations de référence augmentées de 200.

Le palier des figures 7 à 9 comporte en particulier un roulement 201 reçu dans un logement 202 d'un flasque 203. Ce roulement 201 est constitué d'une bague externe 204, d'une bague interne 205 et de billes 206.

Un élément élastique annulaire 217 repousse élastiquement la bague interne 205 vers le fond du logement 202. Cet élément 217 est une rondelle élastique analogue aux rondelles 118 de la variante des figures 4 à 6. Son anneau interne, référencé par 219, est en appui sur la tranche de la bague interne 205. Ses méplats d'extrémité, référencés par 220a, sont quant à eux en appui sur une rondelle métallique rigide 218 qui est elle-même en butée sur un épaulement 208 de l'arbre A de l'alternateur.

D'autres variantes encore de réalisation sont bien entendu possibles. En particulier, la bague externe du roulement peut également être maintenue dans le logement du flasque par sertissage.

Les structures conformes à l'invention qui viennent d'être décrites présentent de nombreux avantages.

Le jeu axial entre l'arbre et le roulement permet d'absorber les dilatations différentielles entre l'arbre A et son palier ; ce jeu permet également, une fois le roulement en place sur le flasque, le montage du palier sur l'arbre sans contrainte supplémentaire sur le roulement.

Le jeu du roulement par rapport à son support (flasque) est réduit, de sorte que le battement axial du rotor est limité. Dans le cas notamment d'un palier arrière, ce battement pourrait entraîner sous vibrations la destruction par écaillage du roulement avant.

Egalement, avec une telle structure de palier, la température de fonctionnement du roulement est réduite, ce qui est favorable à une bonne lubrification.

La bague externe du roulement étant fixée rigidement, elle ne subit pas de rotation en présence de vibrations. On évite ainsi l'usure des parois du logement dans lequel le roulement est reçu.

La concentricité parfaite entre le logement et le roulement permet d'éviter les bruits magnétiques provoqués sur le palier de l'art antérieur par le décentrage du rotor.

En outre, la solution proposée par l'invention est axialement et radialement peu encombrante. Elle est d'un coût réduit.

Selon les modes de réalisation, la ou les rondelles exercent un effort sur la bague interne et l'épaulement tendant à les écarter élastiquement en assurant le rattrapage du jeu sans contraintes axiales excessives sur les pièces.

Il est avantageux que l'appui de la ou des rondelles s'exerce sur un épaulement de l'arbre plutôt que sur une pièce rapportée fixée rigidiment à l'arbre. En effet, dans ce dernier cas, on complique la fabrication et le montage de l'ensemble.

## Revendications

1. Assemblage pour machine à arbre tournant comportant un palier à roulement (1, 101, 201) monté entre un support de roulement (3, 103, 203) et l'arbre (A), le palier à roulement comportant une bague externe (4, 104, 204) et une bague interne (5, 105, 205) entre lesquelles sont interposés des éléments de roulement (6, 106, 206), la bague externe étant maintenue rigidement sur le support, la bague interne et l'arbre étant coulissants l'un par rapport à l'autre, l'assemblage comportant au moins une rondelle (7, 117, 217) montée entre la bague interne et un épaulement (8, 108, 208) de l'arbre et exerçant entre la bague interne et l'épaulement un effort tendant à les écarter pour annuler les jeux de fonctionnement, la rondelle présentant un anneau plat et une pluralité de pattes élastiques s'étendant radialement à partir de l'anneau, ces pattes élastiques présentant une portion inclinée par rapport au plan de l'anneau et étant terminées par un méplat d'extrémité parallèle au plan de l'anneau, **caractérisé en ce que** l'anneau plat est un anneau intérieur, lesdites pattes s'étendant à partir dudit anneau à l'extérieur de celui-ci avec une forme générale trapézoïdale dont la grande base est située au niveau dudit anneau plat et dont la petite base est située à l'extrémité desdites pattes où celles-ci se terminent par un méplat.

2. Assemblage selon la revendication 1, **caractérisé en ce qu'**il comporte deux rondelles (118) superposées qui présentent chacune un anneau intérieur (119) et une pluralité de pattes élastiques (120) qui s'étendent dudit anneau (119) vers l'extérieur, les pattes élastiques (120) des deux rondelles (118) se rejoignant à leurs extrémités (120a) et maintenant les deux anneaux intérieurs (119) écartés l'un de l'autre, l'un de ces anneaux (119) étant en appui sur l'épaulement (108), l'autre étant en appui sur la bague interne (105) du roulement (101).

3. Assemblage selon la revendication 1, **caractérisé en ce qu'**il comporte une rondelle annulaire rigide (218) en butée sur l'épaulement (208) de l'arbre (A) et une rondelle élastique (217) qui présente un anneau interne (219) par lequel elle est en appui sur la bague interne (205) du roulement (201) et une pluralité de pattes élastiques (220) qui s'étendent à partir dudit anneau (219) interne et qui sont en appui sur la rondelle rigide (218).

4. Assemblage selon l'une des revendications précédentes, **caractérisé en ce que** la bague externe (4, 104, 204) est fixée dans le logement (2, 102, 202) du support (3, 103, 203) qui reçoit le roulement (1, 101, 201), par serrage contre une paroi de fond (2a) de ce logement.

5. Assemblage selon la revendication 4, **caractérisé en ce qu'**une plaquette (9, 109, 209) est rapportée par vissage (10, 110, 210) sur la face du support (3, 103, 203) opposée audit fond (2a, 102a, 202a).

6. Assemblage selon l'une des revendications 4 ou 5, **caractérisé en ce que** la bague externe est sertie dans le logement du support qui reçoit le roulement.

7. Assemblage selon l'une des revendications 4 à 6, **caractérisé en ce que** la paroi de fond (2a, 102a, 202a) du logement (2, 102, 202) présente une portée annulaire (2b, 102b, 202b) en saillie à l'intérieur du logement (2, 102, 202) contre laquelle la bague externe est en appui.

8. Alternateur, notamment de véhicule automobile, **caractérisé en ce qu'**il comporte un palier arrière constitué par un assemblage selon l'une des revendications précédentes.

## Patentansprüche

1. Baugruppe für eine Maschine mit rotierender Welle, umfassend ein Wälzlager (1, 101, 201), das zwischen einem Wälzlagerträger (3, 103, 203) und der Welle (A) gelagert ist, wobei das Wälzlager einen Außenring (4, 104, 204) und einen Innenring (5, 105, 205) umfaßt, zwischen denen Wälzlagerelemente (6, 106, 206) eingefügt sind, wobei der Außenring starr am Träger gehalten wird, während der Innenring und die Welle verschiebbar im Verhältnis zueinander gelagert sind, wobei die Baugruppe wenigstens eine Scheibe (7, 117, 217) umfaßt, die zwischen dem Innenring und einer Schulter (8, 108, 208) der Welle gelagert ist und zwischen dem Innenring und der Schulter eine Kraft ausübt, die auf ihre Beabstandung hinwirkt, um die Betriebsspiele aufzuheben, wobei die Scheibe einen Flachring und eine Mehrzahl von elastischen Ansätzen aufweist, die sich von dem Ring aus radial erstrecken, wobei diese elastischen Ansätze einen im Verhältnis zur Ebene des Rings geneigten Abschnitt aufweisen und in einer zur Ebene des Rings parallelen Abschlußabflachung enden, **dadurch gekennzeichnet, daß** der Flachring ein innerer Ring ist, wobei sich die besagten Ansätze von dem besagten Flachring aus außerhalb dieses Rings mit einer trapezartigen Gesamtform erstrecken, deren größere Basis sich in Höhe des besagten Flachrings befindet und deren kleinere Basis sich an dem Ende der besagten Ansätze befindet, an dem diese in einer Abflachung enden.

2. Baugruppe nach Anspruch 1, **dadurch gekennzeichnet, daß** sie zwei übereinander angeordnete Scheiben (118) umfaßt, die jeweils einen inneren Ring (119) und eine Mehrzahl von elastischen Ansätzen (120) aufweisen, die sich von dem besagten Ring (119) aus nach außen erstrecken, wobei sich die elastischen Ansätze (120) der beiden Scheiben (118) an ihren Enden (120a) aneinander anschließen und die beiden inneren Ringe (119) zueinander beabstandet halten, wobei einer dieser Ringe (119) an der Schulter (108) zur Anlage kommt, während der andere am Innenring (105) des Wälzlagers (101) zur Anlage kommt.

3. Baugruppe nach Anspruch 1, **dadurch gekennzeichnet, daß** sie eine an der Schulter (208) der Welle (A) anstoßende starre ringförmige Scheibe (218) und eine Federscheibe (217), die einen inneren Ring (219) aufweist, durch den sie am Innenring (205) des Wälzlagers (201) zur Anlage kommt, und eine Mehrzahl von elastischen Ansätzen (220) umfaßt, die sich von dem besagten inneren Ring (219) aus erstrecken und die an der starren Scheibe (218) zur Anlage kommen.

4. Baugruppe nach einem der vorangehenden Ansprüche, **dadurch gekennzeichnet, daß** der Außenring (4, 104, 204) in der Aufnahme (2, 102, 202) des Trägers (3, 103, 203), die das Wälzlager (1, 101, 201) aufnimmt, durch Anpressen an einer Bodenwand (2a) dieser Aufnahme befestigt ist.

5. Baugruppe nach Anspruch 4, **dadurch gekennzeichnet, daß** ein Plättchen (9, 109, 209) durch Verschraubung (10, 110, 210) an der dem besagten Boden (2a, 102a, 202a) gegenüberliegenden Fläche des Trägers (3, 103, 203) angefügt ist.

6. Baugruppe nach einem der Ansprüche 4 oder 5, **dadurch gekennzeichnet, daß** der Außenring in der Aufnahme des Trägers eingepreßt ist, die das Wälzlager aufnimmt.

7. Baugruppe nach einem der Ansprüche 4 bis 6, **dadurch gekennzeichnet, daß** die Bodenwand (2a, 102a, 202a) der Aufnahme (2, 102, 202) eine vorstehende ringförmige Sitzfläche (2b, 102b, 202b) im Innern der Aufnahme (2, 102, 202) aufweist, an welcher der Außenring zur Anlage kommt.

8. Wechselstromgenerator, insbesondere für Kraftfahrzeuge, **dadurch gekennzeichnet, daß** er einen hinteren Lagerschild umfaßt, der aus einer Baugruppe nach einer der vorangehenden Ansprüche besteht.

## Claims

1. An assembly for a rotary shaft machine, the assembly comprising a ball or roller bearing assembly (1, 101, 201) mounted between a bearing support (3, 103, 203) and the shaft (A), the bearing assembly comprising an outer ring (4, 104, 204) and an inner ring (5, 105, 205) between which rolling elements (6, 106, 206) are interposed, the outer ring being held rigidly to the support, the inner ring and the shaft being slidable relative to each other, the assembly further comprising at least one washer (7, 117, 217) mounted between the inner ring and a shoulder (8, 108, 208) of the shaft and exerting force between the inner ring and the shoulder tending to move them apart to take up operating slack, the washer presenting a flat annulus and a plurality of resilient tabs extending radially from the annulus, the resilient tabs each presenting a portion that is inclined relative to the plane of the annulus and each being terminated by an end flat parallel to the plane of the annulus, the assembly being **characterized in that** the flat annulus is an inner annulus, said tabs extending from said annulus towards the outside of said annulus, which tabs are trapezium shaped having a big base that is situated at said flat annulus and having a small base that is situated at the end of said tabs where said tabs terminate by a flat.

2. An assembly according to claim 1, **characterized in that** it includes two superposed washers (118) each comprising an inner annulus (119) and a plurality of resilient tabs (120) extending outwards from said annulus (119), the resilient tabs (120) of the two washers (118) meeting at their ends (120a) and holding the two inner annuluses (119) spaced apart from each other, one of the annuluses (119) pressing against the shoulder (108) while the other presses against the inner ring (105) of the bearing (101).

3. An assembly according to claim 1, **characterized in that** it includes a rigid annular washer (218) in abutment against the shoulder (208) of the shaft (A), and a resilient washer (217) having an inner annulus (219) whereby it presses against the inner ring (205) of the bearing (201), and a plurality of resilient tabs (220) which extend from said inner annulus (219) and which press against the rigid washer (218).

4. An assembly according to any preceding claim, **characterized in that** the outer ring (4, 104, 204) is fixed in the housing (2, 102, 202) of the support (3, 103, 203) which receives the bearing (1, 101, 201) by being clamped against the end wall (2a) of said housing.

5. An assembly according to claim 4, **characterized in that** a plate (9, 109, 209) is applied against the face of the support (3, 103, 203) remote from said end wall (2a, 102a, 202a) by means of screws (10, 110, 210).

6. An assembly according to claim 4 or 5, **characterized in that** the outer ring of the bearing is crimped in the support housing that receives the bearing.

7. An assembly according to any one of claims 4 to 6, **characterized in that** the end wall (2a, 102a, 202a) of the housing (2, 102, 202) has an annular thrust surface (2b, 102b, 202b) projecting into the inside of the housing (2, 102, 202) and against which the outer ring of the bearing presses.

8. An alternator, in particular for a motor vehicle, the alternator being **characterized in that** it includes a back bearing assembly constituted by an assembly according to any preceding claim.
